# EUROPÄISCHE PATENTSCHRIFT

(11) **EP 1 444 766 B1**
(45) Veröffentlichungstag und Bekanntmachung des Hinweises auf die Patenterteilung: **16.05.2007**
(21) Anmeldenummer: 02781261.9
(22) Anmeldetag: 17.10.2002
(51) Int. Cl.: H02K 41/03, B60S 1/08

(54) **LINEARANTRIEB MIT BEWEGTER, MASSEREDUZIERTER PASSIVEINHEIT**
LINEAR DRIVE WITH MOVING MASS-REDUCED PASSIVE UNIT
ENTRAINEMENT LINEAIRE COMPRENANT UNE UNITE PASSIVE MOBILE DE MASSE REDUITE

(30) Priorität: 05.11.2001 DE 10153797
(43) Veröffentlichungstag der Anmeldung: 11.08.2004
(73) Patentinhaber: INA-Drives & Mechatronics GmbH & Co oHG, 98527 Suhl (DE)
(72) Erfinder: MARTIN, Klaus, 98527 Suhl (DE); WENDORFF, Eckard, 98544 Zella-Mehlis (DE)
(74) Vertreter: Engel, Christoph Klaus
(86) Internationale Anmeldenummer: PCT/EP2002/011595
(87) Internationale Veröffentlichungsnummer: WO 2003/041245

(56) Entgegenhaltungen:
- DE-A- 4 407 385
- DE-A- 4 428 321
- DE-A- 10 010 754
- DE-A- 19 649 357
- PATENT ABSTRACTS OF JAPAN vol. 005, no. 197 (E-086), 15. Dezember 1981 (1981-12-15) & JP 56 117572 A (JAPAN SERVO CO LTD), 16. September 1981 (1981-09-16)

## Beschreibung

Die vorliegende Erfindung betrifft einen Linearantrieb mit einer feststehenden Aktiveinheit, die Spulenkörpern zur Erzeugung eines veränderlichen Magnetflusses enthält, mit einer Passiveinheit, einer Lagereinheit, die eine reibungsarme Bewegung zwischen Aktiv- und Passiveinheit gestattet, und mit einer Steuereinheit, mit welcher der Magnetfluss steuerbar ist.

In verschiedensten Bereichen der Technik werden heutzutage Linearantriebe (auch Linearmotoren genannt) eingesetzt, die ähnlich wie rotatorische Motoren nach dem elektromagnetischen Prinzip arbeiten. Ein Vorteil solcher Linearantriebe besteht unter anderem darin, dass sowohl krafterzeugende Funktionen als auch Gestellfunktionen in wenigen Baueinheiten integriert werden können. Bei Linearantrieben kann sowohl die Aktiveinheit als: auch die Passiveinheit das bewegte Element sein. Um bei geringem Krafteinsatz hohe Geschwindigkeiten und große Beschleunigungen zu erreichen, muss generell versucht werden, die bewegte Masse zu reduzieren. Bisher wurden dazu die Aktiveinheiten als bewegte Elemente ausgelegt, da sie auch bei der Realisierung von großen Verfahrwegen mit kleinen Abmessungen hergestellt werden können, wenn der mögliche Verfahrweg durch die feststehende Passiveinheit (Stator) vorgegeben ist. Eine Massereduzierung der Aktiveinheit führt jedoch auch zwangsläufig zu einer Reduzierung der maximal erzeugbaren Kräfte, da durch die kleineren Aktiveinheiten nur schwächere Abtriebskräfte erzeugt werden können.

Aus der deutschen Offenlegungsschrift DE 32 08 380 A 1 ist ein Linearantrieb bekannt, bei welchem in der Aktiveinheit Permanentmagneten und Elektromagneten zur Erzeugung eines steuerbaren Magnetflusses enthalten sind. Die Passiveinheit besteht aus einem Weicheisenstreifen, der mit sogenannten Polzähnen versehen ist. In dieser Druckschrift ist das allgemeine Funktionsprinzip solcher Linearmotoren detailliert beschrieben, so dass die Kenntnis der Funktionsweise von Linearmotoren beim Fachmann vorausgesetzt werden kann. Im Nachfolgenden werden zur Vereinfachung weder der übliche Aufbau einer Aktiveinheit eines Linearantriebs noch das geeignete Steuerverfahren im Detail erläutert. In der genannten Druckschrift wird auch ein Hinweis darauf gegeben, dass generell die Möglichkeit besteht, die Passiveinheit als bewegtes Element zu verwenden, während die Aktiveinheit den Stator bildet. In diesen Fällen müssen jedoch hohe Massen bewegt werden, wodurch nur geringe Beschleunigungen möglich sind. Die als Passiveinheiten dienenden Weicheisenstreifen können nämlich nicht beliebig dünn ausgelegt werden, da sie für den von der Aktiveinheit erzeugten Magnetfluss einen ausreichenden Materialquerschnitt bereitstellen müssen. Andernfalls sinkt die Magnetflussdichte, so dass die resultierenden Antriebskräfte klein sind.

In der US 4,563,602 ist ebenfalls ein Linearmotor beschrieben, der sowohl als Einphasensynchronmaschine als auch als Mehrphasensynchronmaschine ausgestaltet sein kann. In diesem Zusammenhang ist darauf hinzuweisen, dass es für die vorliegende Erfindung nicht darauf ankommt, mit welcher Anzahl von Stromphasen die Aktiveinheit betrieben wird und welche speziellen Steuer- und Regelverfahren für eine Optimierung des Antriebs bzw. für eine Erhöhung der Genauigkeit eingesetzt werden. Aus der genannten amerikanischen Patentschrift ist es weiterhin bekannt, dass die Aktiveinheit und die Passiveinheit über eine Luftlagerung miteinander gekoppelt sein können. Solche Luftlager werden bei Linearantrieben häufig eingesetzt, da dies die Reibungsverluste drastisch reduziert. Der dort beschriebene Linearmotor verwendet eine feststehende Passiveinheit und eine bewegte Aktiveinheit, so dass auch hier die zu bewegende Masse relativ hoch ist.

Aus dem Stand der Technik ist auch bekannt, dass Linearmotoren zur Bereitstellung von Bewegungen in mehreren Richtungen verwendet werden können. So zeigt die EP 0 237 639 A 1 einen zylinderförmig aufgebauten Motor, mit welchem Bewegungen in Richtung der z-Achse realisiert werden können.

In der Zeitschrift "antriebstechnik" 33 (1994) Nr. 7, Seite 68, ist ein Präzisionsdirektantrieb beschrieben, der das Funktionsprinzip eines permanentmagneterregten Zweiphasen-Reluktanzschrittmotors in Hybridtechnik einsetzt. Soweit der Aufbau der Aktiveinheiten betroffen ist, wird der Inhalt dieser Druckschrift zur Vermeidung von Wiederholungen hier in die Offenbarung einbezogen.

Eine allgemeine Darstellung des konstruktiven Aufbaus und der Wirkungsweise von elektromagnetischen Schrittmotoren erfolgt in E. Kallenbach "Gerätetechnische Antriebe" ISBN 3-446-15872-3 insbesondere im Kapitel 2.3.2. Im Hinblick auf die Offenbarung der Funktionsweise der von dieser Erfindung betroffenen Linearmotoren wird der Fachmann auch auf diese Quelle verwiesen.

Die DE 196 43 518 A 1 zeigt einen Linearantrieb mit einer bewegten Passiveinheit, die zur Massereduzierung aus einem Leichtbaugrundkörper und einer daran befestigten magnetisierbaren Weicheisenplatte besteht. Zwar kann mit diesem Aufbau tatsächlich eine Massereduzierung der Passiveinheit unter gleichzeitiger Aufrechterhaltung einer ausreichenden Stabilität der Passiveinheit erzielt werden, jedoch muss die zumeist aus Weicheisenmaterial bestehende Platte weiterhin eine Mindestdicke aufweisen, um den erforderlichen Querschnitt zur Leitung des Magnetflusses bereitzustellen, wie dies bereits oben erläutert wurde. Die Masse der Passiveinheit wird daher wesentlich davon abhängen, welche Antriebskräfte benötigt werden. Eine dünnere Auslegung dieser Platte führt zwangsläufig zu einer Reduzierung des möglichen Magnetflusses und damit zur Verringerung der bereitgestellten Antriebskräfte.

Aus der JP 56 117 572 ist ein Linearantrieb mit einem beweglichen Passivteil in Form einer Zahnplatte bekannt. Der bewegliche Passivteil bewegt sich innerhalb einer feststehenden Aktiveinheit bestehend aus zwei sich gegenüberliegenden Teilen mit Laufflächen, die eine Zahnteilung aufweisen. Die Zähne der Aktivlaufflächen sind gegenüber den Zähnen der beweglichen Passiveinheit angeordnet. Der von den Teilen der Aktiveinheit jeweils erzeugte Magnetkreis wird im Passivelement geschlossen. In Abhängigkeit von der jeweils benötigten Antriebskraft muss daher ein nicht geringer Querschnitt der Passiveinheit bereit gestellt werden.

Die Aufgabe der vorliegenden Erfindung besteht somit darin, einen Linearantrieb mit einer verbesserten Passiveinheit bereitzustellen, die trotz deutlich reduzierter Masse der bewegten Teile der Passiveinheit einen großen Magnetfluss zur Erzeugung hoher Kräfte ermöglicht.

Diese und weitere Aufgaben werden durch den erfindungsgemäßen Linearantrieb gelöst, dessen Merkmale im Anspruch 1 angegeben sind.

Der von der Aktiveinheit erzeugte Magnetfluss durchläuft bei der erfindungsgemäßen Gestaltung die magnetisch leitenden Zähne der Zahnplatte in gleicher Weise, wie dies bei an sich bekannten Linearmotoren der Fall ist. Der Magnetkreis wird jedoch nicht (oder zumindest nicht vollständig) unmittelbar im bewegten Teil der Passiveinheit, also in der beweglich gelagerten Zahnplatte, geschlossen. Vielmehr tritt der Magnetfluss nach Durchlaufen der einzelnen Zähne in das feststehende Rückflusselement ein, welches in magnetischer Hinsicht gemeinsam mit der bewegten Zahnplatte die Passiveinheit bildet. Der in Bezug auf den Magnetfluss wirksame Materialquerschnitt wird durch das feststehende Rückflusselement erhöht. Dadurch kann die beweglich gelagerte Zahnplatte sehr dünn ausgebildet sein, wodurch eine drastische Massereduzierung möglich ist.

Gemäß einer ersten Ausführungsform wird das feststehende Rückflusselement durch einen Weicheisenblock gebildet, der eine Passivlauffläche besitzt, welche der Aktivlauffläche des Aktivelements parallel gegenüberliegt. Zwischen diesen beiden parallelen Laufflächen bewegt sich die Zahnplatte, wenn die in der Aktiveinheit erzeugten Magnetfelder geeignet verändert werden.

Bei einer abgewandelten Ausführungsform des erfindungsgemäßen Linearantriebs besitzt die Passivlauffläche ebenfalls eine Zahnteilung, die der Zahnteilung der Aktivlauffläche entspricht.

Eine nochmals abgewandelte Ausführungsform zeichnet sich dadurch aus, dass das feststehende Rückflusselement durch eine zweite feststehende Aktiveinheit mit einer zweiten Aktivlauffläche gebildet ist. Damit befindet sich auf jeder Seite der bewegten Zahnplatte ein Aktivlaufelement, wodurch trotz stark reduzierter Masse der bewegten Zahnplatte große Antriebskräfte bereitgestellt werden können. Da die zweite Aktivlauffläche ebenfalls einen magnetisch leitfähigen Bereich bereitstellt, erfolgt keine Unterbrechung des Magnetkreises, obwohl die einzelnen Zähne der Zahnplatte nicht unmittelbar durch magnetisch leitfähige Bereiche verbunden sind.

Bei der Verwendung von zwei sich gegenüberliegenden Aktiveinheiten können die einzelnen Spulenkörper der Aktiveinheiten unabhängig voneinander angesteuert werden oder elektrisch zusämmengeschaltet sein, so dass sie einen einheitlichen Spulenkörper bilden, welcher von der Steuereinheit angesteuert wird.

Es ist besonders vorteilhaft, wenn die bewegte Zahnplatte aus einer magnetisch nicht leitenden Trägerplatte besteht, in welcher die magnetisch leitenden Zähne befestigt sind. Auf diese Weise kann die geforderte hohe Präzision der Positionierung der einzelnen Zähne erreicht werden. Beispielsweise besteht die Trägerplatte aus Keramik, wobei eine Vielzahl von gleichmäßig beabstandeten, parallel verlaufenden Aussparungen vorgesehen sind, in die Weicheisenstreifen eingelegt werden. Die magnetisch leitenden Zähne können auch durch andere Technologien erzeugt werden, z.B. durch galvanische Verfahren oder andere Beschichtungsverfahren.

Bei einer abgewandelten Ausführungsform besteht die Zahnplatte aus einer magnetisch leitfähigen Trägerplatte, aus welcher die einzelnen Zahnlücken als :Zwischenräume zwischen den Zähnen ausgespart sind. Um eine ebene Oberfläche der Zahnplatte bereitzustellen, was bei der Anwendung eines Luftlagers zweckdienlich ist, werden die Zahnlücken mit einem magnetisch nicht leitenden Material (z.B. Kunstharz) ausgefüllt und nachfolgend verschliffen.

Sofern die Anforderungen an die Verringerung der Masse der bewegten Zahnplatte nicht zu groß sind, kann die bewegte Zahnplatte auch einen Rückflussabschnitt besitzen, der die einzelnen Zähne der Zahnplatte magnetisch leitend miteinander verbindet. Dieser Rückflussabschnitt kann beispielsweise durch eine Weicheisenfolie gebildet sein, die auf der dem feststehenden Rückflusselement zugewandten Seite der Zahnplatte angebracht ist. Das feststehende Rückflüsselement und der mitbewegte Rückflussabschnitt stellen in diesem Fall gemeinsam den gewünschten Querschnitt zur Durchleitung des Magnetflusses bereit.

Es ist besonders vorteilhaft, wenn auf der Zahnplatte magnetisch leitende Hilfszähne vorhanden sind, die senkrecht zu den eigentlichen Zähnen (bezogen auf den Antrieb auch als Polzähne zu verstehen) verlaufen. Diese Hilfszähne wirken mit Seitenführungsmagneten zusammen, die in der Aktiveinheit angeordnet sein können. Dabei kann es sich um Permanentmagnete oder Elektromagnete handeln. Auf diese Weise kann eine zusätzliche berührungslose Seitenführung für die Zahnplatte bereitgestellt werden, wenn diese z.B. durch ein Luftlager an die Aktiveinheit gekoppelt ist.

Soweit das an den Seitenführungsmagneten bereitgestellte Magnetfeld veränderbar ist, kann damit die Zahnplatte quer zur Hauptbewegungsrichtung (um einen kleiwen Betrag) seitlich verschoben werden, wenn dies für bestimmte Anwendungsfälle erforderlich sein sollte. Diese Ausführungsform entspricht letztlich einem Zweikoordinatenantrieb, wie er für größere Verstellwege bereits aus dem Stand der Technik bekannt ist.

Generell könnten die Zähne und die Hilfszähen auch "verschachtelt" in einer Kreuzstruktur angeordnet sein, wie dies von Zwei-Koordinatenantrieben bekannt ist.

Die Form der Zahnplatte kann den jeweiligen Einsatzfällen angepasst werden. Bei einer linearen Bewegung wird eine rechteckige Zahnplatte bevorzugt werden, während mit einer kreisförmigen Zahnplatte auch Drehbewegungen realisiert werden können.

Besonders vorteilhaft sind Zahnplatten, die eine Dicke zwischen 0,4 mm bis 5 mm besitzen. Eine optimale Gestaltung wird erzielt, wenn die Dicke der einzelnen Zähne der Zahnplatte etwa gleich der Breite dieser Zähne ist. Bei entsprechenden Tests konnten Zahnplatten erfolgreich eingesetzt werden, die ein Gesamtgewicht von nur 10 g aufwiesen. Mit derartigen Zahnplatten wurden Kräfte von bis zu 15 N realisiert; womit ein hervorragendes Kraft-Masse-Verhältnis erreicht ist.

Wie bereits oben erwähnt wurde, eignen sich Luftlager besonders als Lagereinheit für den erfindungsgemäßen Linearantrieb. Die dafür erforderlichen Luftdüsen können in der Aktiveinheit und im Rückflusselement angebracht werden, so dass die Zahnplatte beidseitig auf einem Luftposter geführt wird. Natürlich kann der erfindungsgemäße. Linearantrieb auch mit anderen Führungs- und Lagerelementen realisiert werden, beispielsweise wenn die Zahnplatte in einer Rollenschiene oder in einer Schwalbenschwanzführung gelagert ist.

Weitere Vorteile, Einzelheiten und Weiterbildungen ergeben sich aus der nachfolgenden Beschreibung bevorzugter Ausführungsformen der Erfindung, unter Bezugnahme auf die Zeichnung. Es zeigen:
- Fig. 1: eine teilweise geschnittene Seitenansicht eines erfindungsgemäßen Linearantriebs mit einer vergrößerten Detaildarstellung;
- Fig. 2: eine vereinfachte Draufsicht auf eine Aktiveinheit und eine Zahnplatte des Linearantriebs;
- Fig. 3: eine geschnittene Detailansicht eines Spulenkörpers des Linearantriebs;
- Fig. 4: eine Draufsicht auf eine Zahnplatte mit einer vergrößerten Detaildarstellung.

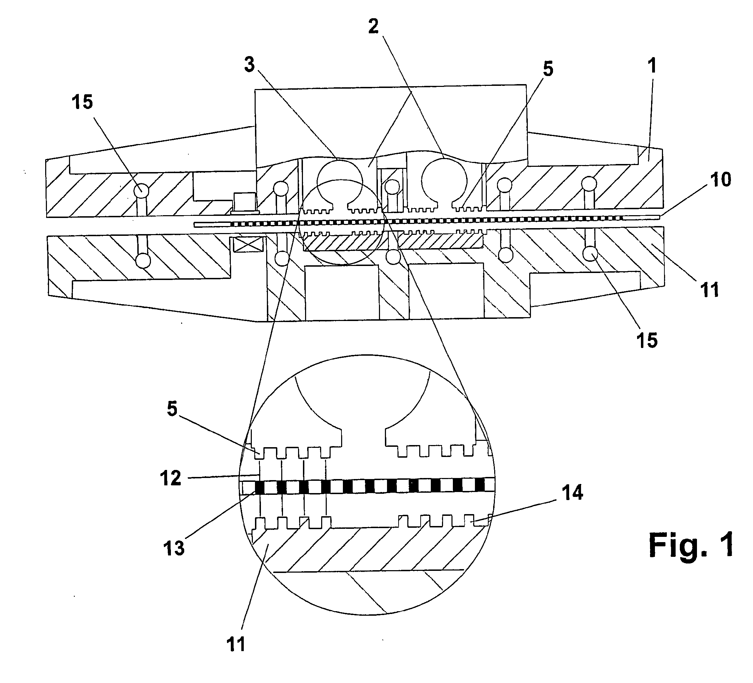

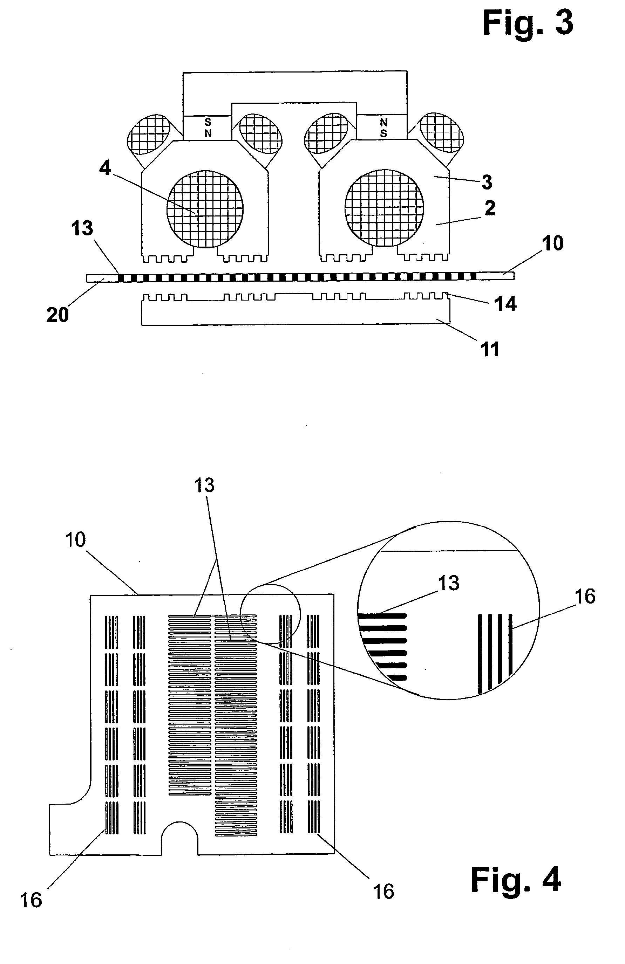

Fig. 1 zeigt eine teilweise geschnittene Seitenansicht eines erfindungsgemäßen Linearantriebs. Der Linearantrieb besitzt eine Aktiveinheit 1, in welcher mehrere Spulenkörper 2 enthalten sind. Die Spulenkörper 2 bestehen aus paketierten Weicheisenkernen, die mit einer elektrischen Wicklung 4 (siehe Fig. 3) zur Erzeugung eines veränderlichen Magnetfeldes versehen sind. Die elektrischen Wicklungen werden von einer Steuereinheit (nicht dargestellt) angesteuert, um den resultierenden Magnetfluss so zu gestalten, dass Antriebskräfte erzeugt werden. Hinsichtlich der Funktionsweise eines solchen Linearantriebs wird auf den in der Beschreibungseinleitung genannten Stand der Technik verwiesen.

Die Spulenkörper besitzen an ihrer nach außen gerichteten Seite eine Aktivlauffläche 5, die ihrerseits eine vom Magnetfluss durchströmte Zahnteilung aufweist. Die Zahnteilung besteht aus Zähnen und Zahnlücken, wobei die Zahnlücken üblicherweise mit einem magnetisch nicht leitenden Material aufgefüllt sind, um eine ebene Aktivlauffläche 5 zu erzeugen.

Der Linearantrieb besitzt weiterhin eine dünne, beweglich gelagerte Zahnplatte 10 und ein feststehendes Rückflusselement 11. Die Zahnplatte 10 und das Rückflusselement 11 bilden gemeinsam die Passiveinheit des Linearantriebs. In der in Fig. 1 enthaltenen Detailvergrößerung ist der Verlauf des erzeugten Magnetflusses durch einzelne Striche 12 dargestellt. Der Magnetfluss geht von den Zähnen der Aktivlauffläche 5 aus, durchdringt die magnetisch leitenden Zähne 13 der Zahnplatte 10 und verläuft dann in das aus Weicheisenmaterial bestehende Rückflusselement 11, welches den Magnetkreis schließt.

Bei der in Fig. 1 gezeigten Ausführungsform besitzt das Rückflusselement 11 ebenfalls Zähne, die eine Passivlauffläche 14 bilden. Die Passivlauffläche 14 kann bei anderen Ausführungsformen auch als ebene Fläche gestaltet sein, da die für die Erzeugung der Antriebskräfte erforderliche Zahnteilung nur in der Zahnplatte, 10 zwingend notwendig ist.

Die Zahnplatte 10 ist somit beweglich zwischen der Aktiveinheit 1 und dem Rückflusselement 11 gelagert, wobei die Lagerung durch mehrere Luftdüsen 15 gebildet wird, die für die Zahnplatte 10 ein Luftlager bereitstellen.

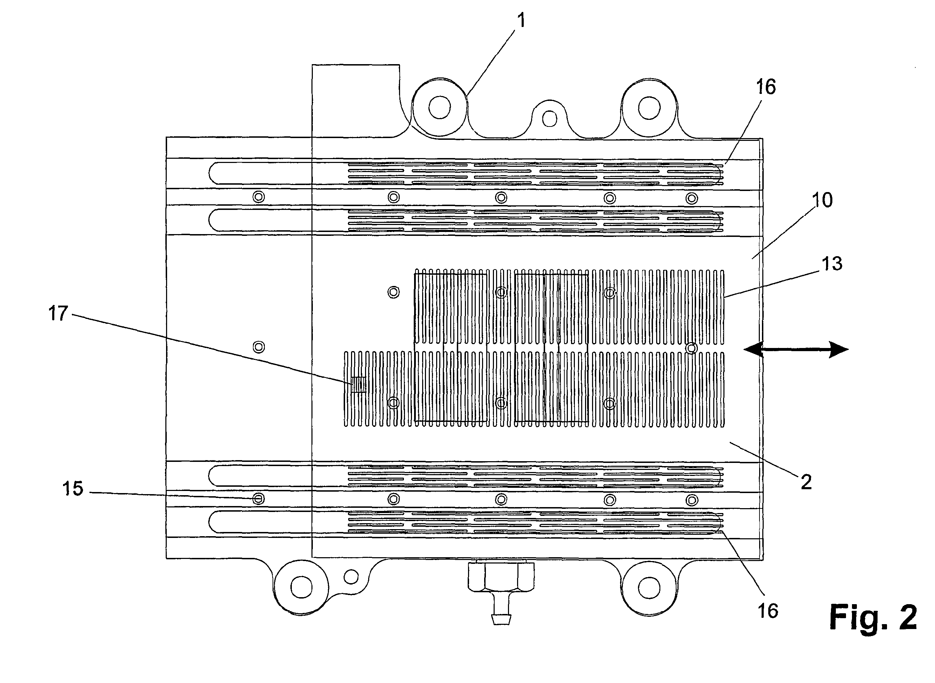

Fig. 2 zeigt eine vereinfachte Draufsicht auf den Linearantrieb, wobei die Aktiveinheit 1 und die darüber liegende bewegliche Zahnplatte 10 dargestellt sind. Das feststehende Rückflusselement ist in Fig. 2 nicht gezeigt. Die mögliche Bewegungsrichturig der Zahnplatte 10 ist durch einen Pfeil angedeutet. Die Zähne 13 der Zahnplatte 10 erstrecken sich quer zur Bewegungsrichtung. Da durch das oben erwähnte Luftlager keine Führung bereitgestellt wird, die eine Verschiebung der Zahnplatte 10 quer zur Hauptbewegungsrichtung verhindern würde, müssen zusätzliche Vorkehrungen für eine solche Führung getroffen werden. Bei der in Fig. 2 dargestellten Ausführungsform geschieht dies mit Hilfe von magnetisch leitfähigen Hilfszähnen 16, die senkrecht zu den Zähnen 13 der Zahnplatte 10. an den Seitenrändern dieser Zahnplatte angeordnet -sind. Die Hilfszähne 16 wirken mit Seitenführungsmagneten zusammen, die in der Aktiveinheit und/oder im Rückflusselement positioniert sind. Durch diese Hilfszähne 16 fließt wiederum ein Magnetfluss, der einer seitlichen Verschiebung der Zahnplatte 10 entgegenwirkt. Bei einer abgewandelten Ausführungsform ist es möglich, die Seitenführungsmagnete vergleichbar zu den Spulenkörpern der Aktiveinheit auszubilden, so dass das durch die Hilfszähne 16 fließende Magnetfeld ebenfalls verändert werden kann, um eine gezielte seitliche Verschiebung der Zahnplatte 10 zu ermöglichen.

Außerdem ist in Fig. 2 ein magnetoresistiver Sensor 17 eingezeichnet, der mit einem gegenüberliegenden Permanentmagneten (nicht dargestellt) zusammenwirkt und die durch die Bewegung der Zahnplatte verursachten Magnetfeldänderungen erfasst. Die vom Sensor gelieferten Signale können in einem Messsystem verwendet werden, um die Verschiebung der Zahnplatte sehr genau zu messen. Natürlich können auch andere Messmittel eingesetzt werden.

Fig. 3 zeigt in einer vereinfachten Schnittansicht den Spulenkörper 2 der Aktiveinheit 1. Je nach verwendetem Ansteuerverfahren kann die elektrische Wicklung 4 zwei nebeneinander liegende Weicheisenkerne durchlaufen oder wie bei der in Fig. 3 gezeigten Ausführungsform jeweils auf einem eigenständigen Weicheisenkern 3 angebracht sein. Die zuerst genannte Wickeltechnik ist beispielsweise in dem in der Beschreibungseinleitung genannten Stand der Technik dargestellt. Bei abgewandelten Ausführungsformen wäre es auch möglich, die elektrische Wicklung 4 mit einer Teilwicklung zu verbinden, die an einem weiteren Spulenkörper angebracht ist, der sich in einer zweiten Aktiveinheit befindet (nicht dargestellt). Diese zweite Aktiveinheit ersetzt in diesem Fall das Rückflusselement 11 und wird auf der anderen Seite der Zahnplatte 10 positioniert.

Ebenso wäre es möglich, den Spulenkörper der Aktiveinheit über einen Eisenrückschluss magnetisch mit dem Rückflusselement bzw. einem Abschnitt davon zu verbinden. Der Magnetkreis würde weiterhin wie gewünscht durch die Zähne der Zahnplatte verlaufen. Jedoch können mit diesem Aufbau ggf. größere Antriebskräfte pro Fläche der Zahnplatte erzeugt werden.

Die Zahnplatte 10 besteht beispielsweise aus einer Trägerplatte 20, die eine Vielzahl von Aussparungen aufweist, in denen die einzelnen Zähne 13 angeordnet sind. Die Trägerplatte 20 besteht in diesem Fall aus einem magnetisch nicht leitfähigen Material, beispielsweise Keramik. Es wäre aber auch möglich, die Zahnplatte 10 aus einem Weicheisenmaterial herzustellen, wobei die einzelnen Zähne 13 magnetisch durch eine dünne :Platte bzw. Folie auf der der Aktiveinheit 1 abgewandten Seite verbunden sind, die einen Rückflussabschnitt bilden. Dieser Rückflussabschnitt würde dann mit dem Rückflusselement 11 zusammenwirken, bei welchem auf die Zähne an der Passivlauffläche 14 auf verzichtet werden kann.

Fig. 4 zeigt eine Draufsicht auf die Zahnplatte 10 mit einer vergrößerten Detailansicht. Aus dieser Vergrößerungsansicht ist erkennbar, dass die Hilfszähne 16 im Wesentlichen senkrecht zu den Zähnen 13 verlaufen. Für eine bessere Seitenstabilisierung sind die Hilfszähne 16. auf beiden Seiten der Zahnplatte 10 angebracht.. Außerdem sind zwei Reihen von Zähnen 13 vorgesehen, die die Polzähne der Zahnplatte bilden. Die Anordnung der Zähne 13 auf der Zahnplatte 10 kann bei abgewandelten Ausführungsformen in anderer Weise erfolgen.

Außerdem ist darauf hinzuweisen, dass die Formgebung der Zahnplatte 10 an den speziellen Einsatzfall angepasst werden kann. Beispielsweise könnte eine ringförmige Zahnplatte mit radial verlaufenden Zähnen verwendet werden, um mit einer angepassten Aktiveinheit die Zahnplatte in eine Drehbewegung zu versetzen. Ebenso kann die Zahnplatte als dreidimensionaler Körper ausgebildet sein. Insbesondere ist es vorteilhaft, wenn die Zahnplatte in Form eines Zylindermantels gestaltet wird. Das Rückflusselement kann beispielsweise als Weicheisenzylinder im Inneren des Zahnplattenzylinders angeordnet sein, während eine oder mehrere Aktiveinheiten an der Außenseite angeordnet werden. Wenn die einzelnen Zähne in Umfangsrichtung am Zahnplattenzylinder angeordnet sind, kann eine Drehbewegung erzeugt werden. Wenn die Zähne statt dessen in Längsrichtung parallel zur Zylinderachse verlaufen, kann eine Hubbewegung erzeugt werden. Ebenso ist es möglich zwei Zahnrichtungen durch eine Kreuzstruktur vorzusehen, so dass der Zähnplattenzylinder sowohl gedreht als auch in Längsrichtung bewegt werden kann.

Vielfältige andere, Ausführungsformen des erfindungsgemäßen Linearantriebs sind möglich und werden für den Fachmann unter Berücksichtigung der hier detailliert beschriebenen Ausführungsformen ohne weiteres erkennbar sein.

### Bezugszeichenliste

- 1: Aktiveinheit
- 2: Spulenkörper
- 3: Weicheisenkern
- 4: elektrische Wicklung
- 5: Aktivlauffläche
- 10: Zahnplatte
- 11: Rückflusselement
- 12: Magnetfluss
- 13: Zähne der Zahnplatte
- 14: Passivlauffläche
- 15: Luftdüsen
- 16: Hilfszähne
- 17: magnetoresistiver Sensor
- 20: Trägerplatte

## Patentansprüche

1. Linearantrieb mit
• einer feststehenden Aktiveinheit (1) mit Spulenkörpern (2) zur Erzeugung eines veränderlichen Magnetflusses und einer Aktivlauffläche (5), die eine vom Magnetfluss durchströmte Zahnteilung besitzt;
• einer Passiveinheit, die Magnetflussbereiche umfasst, wobei die Passiveinheit eine dünne beweglich gelagerte Zahnplatte (10) beinhaltet, und wobei sich auf der Zahnplatte (10) magnetisch leitende Zähne (13) und magnetisch nicht leitende Zahnlücken in einer der Zahnteilung der Aktivlauffläche (5) und deren Ausrichtung entsprechenden Weise abwechseln; .
• einer Lagereinheit (15), die eine reibungsarme Bewegung zwischen Aktiv- und Passiveinheit gestattet; und
• einer Steuereinheit, mit welcher der Magnetfluss steuerbar ist;
**dadurch gekennzeichnet, dass** die Passiveinheit die dünne beweglich gelagerte Zahnplatte (10) und ein feststehendes Rückflusselement (11) umfasst, wobei die Zahnplatte (10) zwischen der Aktivlauffläche (5) der Aktiveinheit (1) und dem Rückflusselement (11) gelagert ist und wobei ,der von der Aktiveinheit erzeugte Magnetfluss nach Durchlaufen der einzelnen Zähne (13) der Zahnplatte (10) in das Rückflusselement (11) eintritt, dieses durchströmt und durch die Zahnplatte (10) zurück zur Aktiveinheit verläuft.

2. Linearantrieb nach Anspruch 1, **dadurch gekennzeichnet, dass** das feststehende Rückflusselement (11) durch einen Weicheisenblock gebildet ist, welcher eine der Aktivlauffläche parallel gegenüberliegende Passivlauffläche (14) besitzt.

3. Linearantrieb nach Anspruch 2, **dadurch gekennzeichnet, dass** die Passivlauffläche (14) ebenfalls eine Zahnteilung aufweist, die der Zahnteilung der Aktivlauffläche (5) entspricht.

4. Linearantrieb nach Anspruch 1, **dadurch gekennzeichnet, dass** das Rückflusselement durch eine zweite feststehende Aktiveinheit mit einer zweiten Aktivlauffläche, die eine vom Magnetfluss durchströmte Zahnteilung besitzt, und mit Spulenkörpern (2) zur Erzeugung eines veränderlichen Magnetflusses gebildet ist.

5. Linearantrieb nach Anspruch 4, **dadurch gekennzeichnet, dass** die erste und die zweite Aktiveinheit jeweils unabhängig voneinander angesteuerte Spulenkörper besitzen.

6. Linearantrieb nach Anspruch 4, **dadurch gekennzeichnet, dass** mindestens ein Spulenkörper der ersten und zweiten Aktiveinheit elektrisch zusammengeschaltet sind und von der Steuereinheit als ein gemeinsamer Spulenkörper angesteuert werden.

7. Linearantrieb nach Anspruch 1, **dadurch gekennzeichnet, dass** das Rückflusselement durch einen Eisenrückschluss magnetisch mit der Aktiveinheit verbunden ist.

8. Linearantrieb nach einem der Ansprüche 1 bis 7, **dadurch gekennzeichnet, dass** die Zahnplatte (10) aus einer magnetisch nicht leitenden Trägerplatte (20) besteht, in welche die magnetisch leitenden Zähne (13) eingelegt sind.

9. Linearantrieb nach Anspruch 8, **dadurch gekennzeichnet, dass** die Trägerplatte (20) aus Keramik, Kunststoff oder Glas besteht.

10. Linearantrieb nach einem der Ansprüche 1, 2 oder 4 bis 7, **dadurch gekennzeichnet, dass** die Zahnplatte (10) aus einer magnetisch leitenden Trägerplatte besteht, aus welcher die Zahnlücken ausgespart sind, die nachfolgend mit magnetische nicht leitenden Material ausgefüllt sind, um wieder eine ebene Oberfläche der Zahnplatte herzustellen.

11. Linearantrieb nach einem der Ansprüche 1 bis 10, **dadurch gekennzeichnet, dass** die Zahnplatte (10) eine rechteckige Form besitzt und dass senkrecht zu den Zähnen (13) magnetisch leitende Hilfszähne (16) verlaufen, die mit parallel zu den Hilfszähnen in der Aktiveinheit (1) angeordneten Seitenführungsmagneten zusammenwirken, um eine seitliche Führung der Zahnplatte bereitzustellen.

12. Linearantrieb nach Anspruch 11, **dadurch gekennzeichnet, dass** die Seitenführungsmagneten ein veränderliches Magnetfeld bereitstellen, mit welchem eine kleine seitliche Verschiebung der Zahnplatte (10) quer zur Hauptbewegungsrichtung bewirkt werden kann.

13. Linearantrieb nach einem der Ansprüche 1 bis 12, **dadurch gekennzeichnet, dass** die Zahnplatte eine Kreisform besitzt, wobei die Zähne radial angeordnet sind.

14. Linearantrieb nach einem der Ansprüche 1 bis 12, **dadurch gekennzeichnet, dass** die Zahnplatte die Form eines Hohlzylinders besitzt, wobei die Zähne (13) in Umfangsrichtung und/oder parallel zur Zylinderachse verlaufen.

15. Linearantrieb nach Anspruch 14, **dadurch gekennzeichnet, dass** das Rückflusselement im Inneren des Hohlzylinders angeordnet ist.

16. Linearantrieb nach einem der Ansprüche 1 bis 15, **dadurch gekennzeichnet, dass** die Zahnplatte (10) eine Dicke von 0,4 bis 5 mm besitzt.

17. Linearantrieb nach Anspruch 16, **dadurch gekennzeichnet, dass** die Dicke der Zahnplatte (10) im wesentlichen gleich der Breite der einzelnen Zähne (13) der Zahnplatte ist.

18. Linearantrieb nach einem der Ansprüche 1 bis 17, **dadurch gekennzeichnet, dass** die Zähne (13) auf der Zahnplatte in einer Kreuzstruktur angeordnet sind, und dass mindestens zwei Aktiveinheiten mit senkrecht zueinander ausgerichteten Aktivlaufflächen vorhanden sind, um eine zweidimensionale Bewegung der Zahnplatte zu ermöglichen.

19. Linearantrieb nach einem der Ansprüche 1 bis 18, **dadurch gekennzeichnet, dass** die lagereinheit durch ein Luftlager (15) gebildet ist.

## Claims

1. A linear drive having
- a fixed active unit (1) having coil bodies (2) for generating a variable magnetic flux and an active running surface (5) comprising a tooth pitch through which the magnetic flux flows;
- a passive unit comprising magnetic flux regions, with the passive unit including a thin tooth plate (10), being mounted so as to be movable, and with magnetically conducting teeth (13) and magnetically non-conducting tooth gaps alternating on the tooth plate (10) in a manner corresponding to the tooth pitch of the active running surface (5) and the orientation thereof;
- a bearing unit (15), which permits a low-friction movement between active and passive unit; and
- a control unit for controlling the magnetic flux;
**characterized in that** the passive unit comprises the thin tooth plate (10), which is mounted so as to be movable, and a fixed return element (11), with the tooth plate (10) being mounted between the active running surface (5) of the active unit (1) and the return element (11) and with the magnetic flux generated by the active unit entering into the return element (11) after passing through the individual teeth (13) of the tooth plate (10), passing through said return element (11) and running through the tooth plate (10) back to the active unit.

2. The linear drive according to claim 1, **characterized in that** the fixed return element (11) is formed by a soft metal block having a passive running surface (14) located parallel opposite the active running surface.

3. The linear drive according to claim 2, **characterized in that** the passive running surface (14) also encompasses tooth pitch, which corresponds to the tooth pitch of the active running surface (5).

4. The linear drive according to claim 1, **characterized in that** the return element is formed by a second fixed active unit having a second active running surface, which has a tooth pitch, through which the magnetic flux passes and having coil bodies (2) for generating a variable magnetic flux.

5. The linear drive according to claim 4, **characterized in that** the first and the second active unit each have coil bodies, which are controlled independently on one another.

6. The linear drive according to claim 4, **characterized in that** at least one coil body of the first and second active unit are electrically connected and are controlled by the control unit as a common coil body.

7. The linear drive according to claim 1, **characterized in that** the return element is magnetically connected with the active unit via a magnetic yoke.

8. The linear drive according to one of claims 1 to 7, **characterized in that** the tooth plate (10) consists of a magnetically non-conducting bearing plate (20) into which the magnetically conducting teeth (13) are inserted.

9. The linear drive according to claim 8, **characterized in that** the bearing plate (20) consists of ceramic, plastic or glass.

10. The linear drive according to one of claims 1, 2 or 4 to 7, **characterized in that** the tooth plate (10) consists of a magnetically conducting bearing plate from which the tooth gaps are recessed, which are subsequently filled with magnetically non-conducting material so as to again produce a planar surface of the tooth plate.

11. The linear drive according to one of claims 1 to 10, **characterized in that** the tooth plate (10) has a rectangular shape and that magnetically conducting auxiliary teeth (16) run perpendicular to the teeth (13), said auxiliary teeth (16) cooperating with lateral guide magnets disposed in the active unit (1) parallel to the auxiliary teeth so as to produce a lateral guide of the tooth plate.

12. The linear drive according to claim 11, **characterized in that** the lateral guide magnets provide a variable magnetic field, which can effect a slight lateral displacement of the tooth plate (10) perpendicular to the main direction of movement.

13. The linear drive according to one of claims 1 to 12, **characterized in that** the tooth plate has a circular shape, with the teeth being disposed radially.

14. The linear drive according to one of claims 1 to 12, **characterized in that** the tooth plate has the shape of a hollow cylinder, with the teeth (13) running in circumferential direction and/or parallel to the cylinder axis.

15. The linear drive according to claim 14, **characterized in that** the return element is disposed in the interior of the hollow cylinder.

16. The linear drive according to one of claims 1 to 15, **characterized in that** the tooth plate (10) has a thickness of from 0.4 to 5 mm.

17. The linear drive according to claim 16, **characterized in that** the thickness of the tooth plate (10) is substantially equal to the width of the individual teeth (13) of the tooth plate.

18. The linear drive according to one of claims 1 to 17, **characterized in that** the teeth (13) are disposed on the tooth plate in a cross structure and **in that** at least two active units with active running surfaces oriented mutually perpendicularly are present so as to enable a two-dimensional movement of the tooth plate.

19. The linear drive according to one of claims 1 to 18, **characterized in that** the bearing unit is formed by an air bearing (15).

## Revendications

1. Moteur linéaire comprenant
- une unité active fixe (1) avec des corps de bobine (2) pour la génération d'un flux magnétique variable et une surface active de roulement (5) qui possède un pas de denture traversé par le flux magnétique ,
- une unité passive qui comprend des zones de flux magnétique, l'unité passive contenant une fine plaque dentée (10) logée mobile, et des dents (13) magnétiquement conductrices étant disposées en alternance avec des entre-dents magnétiquement non conducteurs sur la plaque dentée (10) de manière correspondante au pas de denture de la surface active de roulement (5) et de son alignement;
- une unité formant palier (15) qui permet un déplacement faible en friction entre l'unité passive et l'unité active; et
- une unité de commande qui permet de commander le flux magnétique;
**caractérisé en ce que** l'unité passive comprend la fine plaque dentée (10) mobile et un élément de reflux (11) fixe, la plaque dentée (10) étant logée entre la surface active de roulement (5) de l'unité active (1) et l'élément de reflux (11) et le flux magnétique généré par l'unité active pénétrant après avoir traversé chacune des dents (13) de la plaque dentée (10) dans l'élément de reflux (11) le traverse et revient à l'unité active par la plaque dentée (10).

2. Moteur linéaire selon la revendication 1, **caractérisé en ce que** l'élément de reflux fixe (11) est constitué par un bloc d'acier doux qui possède une surface de roulement passive (14) parallèlement opposée à la surface de roulement active.

3. Moteur linéaire selon la revendication 2, **caractérisé en ce que** la surface de roulement passive (14) présente également un pas de denture qui correspond au pas de denture de la surface de roulement active (5).

4. Moteur linéaire selon la revendication 1, **caractérisé en ce que** l'élément de reflux est formé par une seconde unité active fixe comprenant une seconde surface de roulement active qui possède un pas de denture traversé par le flux magnétique, par un corps de bobine (2) pour la formation d'un flux magnétique variable.

5. Moteur linéaire selon la revendication 4, **caractérisé en ce que** la première et la seconde unité active possèdent des corps de bobine à commande respective indépendante.

6. Moteur linéaire selon la revendication 4, **caractérisé en ce qu'**au moins un corps de bobine de la première et de la seconde unité active sont assemblés et sont commandés par l'unité de commande comme un corps de bobine commun.

7. Moteur linéaire selon la revendication 4, **caractérisé en ce que** l'élément de reflux est relié à l'unité active magnétiquement par un blindage magnétique.

8. Moteur linéaire selon l'une des revendications 1 à 7, **caractérisé en ce que** la plaque dentée (10) se compose d'une plaque support (20) magnétiquement non conductrice dans laquelle sont incorporées les dents (13) magnétiquement conductrices.

9. Moteur linéaire selon la revendication 8, **caractérisé en ce que** la plaque support (20) se compose de céramique, de matière plastique ou de verre.

10. Moteur linéaire selon l'une des revendications 1, 2 ou 4 à 7, **caractérisé en ce que** la plaque dentée (10) se compose d'une plaque support magnétiquement conductrice, où sont évidés les entredents qui sont remplis ensuite de matériau magnétiquement non conducteur pour rétablir une surface plane de la plaque dentée.

11. Moteur linéaire selon l'une des revendications 1 à 10, **caractérisé en ce que** la plaque dentée (10) possède une forme rectangulaire et **en ce que** des dents auxiliaires magnétiquement conductrices (16) s'étendent perpendiculairement aux dents (13), dents auxiliaires qui coopèrent avec des aimants de guidage latéral disposés parallèlement aux dents auxiliaires dans l'unité active (1) pour procurer un guidage latéral de la plaque dentée.

12. Moteur linéaire selon la revendication 11, **caractérisé en ce que** les aimants de guidage latéral fournissent un champ magnétique variable qui permet de provoquer un petit déplacement latéral de la plaque dentée (10) transversalement au sens de déplacement latéral.

13. Moteur linéaire selon l'une des revendications 1 à 12, **caractérisé en ce que** la plaque dentée possède une forme circulaire et les dents sont disposées radialement.

14. Moteur linéaire selon l'une des revendications 1 à 12, **caractérisé en ce que** la plaque dentée possède la forme d'un cylindre creux, les dents (13) s'étendant dans le sens périphérique et/ou parallèlement à l'axe de cylindre.

15. Moteur linéaire selon la revendication 14, **caractérisé en ce que** l'élément de reflux est disposé à l'intérieur du cylindre creux.

16. Moteur linéaire selon l'une des revendications 1 à 15, **caractérisé en ce que** la plaque dentée (10) possède une épaisseur comprise 0,4 et 5 mm.

17. Moteur linéaire selon la revendication 16, **caractérisé en ce que** l'épaisseur de la plaque dentée (10) est sensiblement égale à la largeur de chacune des dents (13) de la plaque dentée.

18. Moteur linéaire selon l'une des revendications 1 à 17, **caractérisé en ce que** les dents (13) sont disposées sur la plaque dentée dans une structure croisée et **en ce qu'**au moins deux unités actives sont présentes avec des surfaces de roulement actives orientées perpendiculairement entre elles pour permettre un mouvement bidimensionnel de la plaque dentée.

19. Moteur linéaire selon l'une des revendications 1 à 18, **caractérisé en ce que** l'unité de palier est formée par un palier à air.
